# EUROPEAN PATENT APPLICATION

(11) **EP 1 529 975 A2**
(43) Date of publication of application: **11.05.2005**
(21) Application number: 04256841.0
(22) Date of filing: 04.11.2004
(51) Int. Cl.: F16C 33/78

(54) **Sealing member for use in rolling bearing and rolling bearing**

(30) Priority: 07.11.2003 JP 2003378240
(71) Applicant: NTN CORPORATION, Osaka-shi Osaka 550-0003 (JP); NAKANISHI METAL WORKS CO., LTD., Osaka 530-8566 (JP)
(72) Inventor: Urakami, Eiichi, c/o Nakanishi Metal Works Co.,Ltd, Kita-ku Osaka 530-8566 (JP); Asao, Mitsunari, c/o NTN Corporation, Oaza Higashikata Kuwana-shi Mie 511-8678 (JP); Egami, Masaki, c/o NTN Corporation, Oaza Higashikata Kuwana-shi Mie 511-8678 (JP)
(74) Representative: Lamb, Martin John Carstairs

(57) **Abstract**

A sealing member, for sealing urea compound-containing grease enclosed in a rolling bearing, in which an elastic body deteriorates to a low extent when the rolling bearing is subj ected to a high temperature and which is capable of maintaining a preferable sealing performance for a long time and excellent in reliability and durability.

The sealing member used for the rolling bearing to seal grease to be enclosed in the rolling bearing includes a rubber molding which contacts the grease. The rubber molding is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

## Description

### Background of the Invention

The present invention relates to a sealing member for use in a rolling bearing. The present invention also relates to the rolling bearing using the sealing member. More particularly, the present invention relates to the sealing member for use in the rolling bearing that is used for electric instrument parts of a car at high temperatures.

The engine room of the car is unavoidably decreased owing to the spread of an FF (front engine and front drive) car developed to make the car compact and lightweight and owing to an increase of a resident space in the car. Therefore researches and developments for manufacturing compact and lightweight electric instrument parts of the car are being further made. Further, electric instrument parts of the car are demanded to have high performance and output.

The rolling bearing is used in the electric instrument parts and auxiliary devices. Urea compound-containing grease is mainly used to lubricate the rolling bearing. Fluorine grease is also used to lubricate the rolling bearing when the electric instrument parts and the like are used in a severe temperature conditionbut the fluorine grease is very expensive. As disclosed in Japanese Patent Application Number Tokugan 2002-100556, the present inventors proposed a mixture of any urea compound-containing grease and the fluorine grease as a method of realizing performance equivalent to that of the fluorine grease at a low cost.

The sealing member for use in the rolling bearing is demanded to be heat-resistant, when the electric instrument parts and the like are used in a severe temperature condition. Acrylic rubber has been hitherto used as an elastic body of the sealing member. However, the acrylic rubber is not sufficiently heat-resistant. Thus instead recently fluororubber is used increasingly.

As examples of fluororubber conventionally used, a binary copolymer (VDF-HFP) of vinylidene fluoride and hexafluoropropylene, and a tertiary copolymer (VDF-HFP-TFE) of the vinylidene fluoride, the hexafluoropropylene, and tetrafluoroethylene are mainly used. These fluororubbers, so-called FKM, are capable of having a sufficient durability by using them in combination with fluorine grease.

When the fluororubber and the urea compound-containing grease are combined with each other, the urea compound causes crosslinking of the fluororubber to proceed. Consequently the fluororubber hardens.

As disclosed in Japanese Patent Application Laid-Open No. 2001-65578, there is proposed a method of improving the durability of the rolling bearing by combining the urea compound-containing grease with a tertiary copolymer of vinylidene fluoride-tetrafluoroethylene-propylene or a binary copolymer of tetrafluoroethylene-propylene.

However, it is difficult to prevent the above-described tertiary copolymer and the binary copolymer from deteriorating with age.

When the rubber elastic body used for the sealing member hardens, the sealing performance thereof deteriorates. Thereby grease leaks. Consequently the life of the rolling bearing becomes short, a contact pressure on the sealing surface becomes high or the rotational torque of the rolling bearing becomes high. Thereby a frictional heat is generated and deterioration of the grease progresses.

### Summary of the Invention

It is an object of the present invention to provide a sealing member, for sealing urea compound-containing grease enclosed in a rolling bearing, in which an elastic body deteriorates to a low extent when the rolling bearing is subjected to a high temperature and which is capable of maintaining a preferable sealing performance for a long time and excellent in reliability and durability.

The sealing member of the present invention, for use in a rolling bearing, for sealing grease to be enclosed in the rolling bearing includes a rubber molding which contacts the grease. The rubber molding is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

The above-described crosslinkable monomer is selected from among trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene.

The copolymer contains vinylidene fluoride.

A rolling bearing 1 includes an inner ring, an outer ring, a plurality of rolling elements disposed between the inner ring and the outer ring, and a sealing member, provided at an opening portion of the inner ring and the outer ring disposed at an axial end thereof, for sealing grease disposed on a periphery of the rolling elements. The grease contains a urea compound. The sealing member is the sealing member, for use in the rollingbearing, of the present invention.

Grease containing the urea compound is mixed grease of fluorine grease and urea grease.

The rubber molding of the present invention for use in the rolling bearing is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms. Therefore even when the sealing member is immersed in grease containing the urea compound, the sealing member deteriorates to a low extent in its properties and is capable of effectivelypreventing leakof the grease. Thereby the sealing member is capable of improving the durability of the rolling bearing.

### Brief Description of the Drawings

Fig. 1 is a sectional view showing a rolling bearing.
Fig. 2 is a sectional view showing a sealing member.

### Detailed Description of the Preferred Embodiments

A fluorine rubber composition that can be used in the present invention is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

The crosslinkable monomer consisting of unsaturated fluoro-hydrocarbon, having two to four carbon atoms, in which a part of hydrogen atoms is substituted with fluorine atoms, trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene are used. Of the above-described crosslinkable monomer, 3, 3, 3-trifluoropropene-1 is most favorable.

As the fourth components of the copolymer, it is possible to use vinylidene fluoride, chlorotrifluoroethylene, perfluoro (alkylvinyl) ether, perfluoro (alcoxyvinyl) ether, perfluoro (alcoxyalkylvinyl) ether, perfluoroalkylalkenyl ether, and perfluoroalcoxyalkenyl ether.

The copolymer composing the fluororubber composition contains 45 to 80 wt%, favorably 50 to 78 wt%, and more favorably 65 to 78 wt% of the tetrafluoroethylene; 10 to 40 wt%, favorably 12 to 30 wt%, and more favorably 15 to 25 wt% of the propylene; and 0.1 to 15 wt%, favorably 2 to 10 wt%, and more favorably 3 to 6 wt% of the crosslinkable monomer for the total amount of the copolymer, respectively.

When the copolymer contains the vinylidene fluoride, the copolymer contains 2 to 20 wt% and favorably 10 to 20 wt% of the vinylidene fluoride. If the copolymer contains more than 20 wt% of the vinylidene fluoride, the resistance of the copolymer to a urea compound deteriorates.

The fluororubber is produced by an emulsion polymerization method or a suspension polymerization method, as disclosed in International Patent Application Laid-Open No. W002/092683.

To allow the fluororubber to be curable, the copolymer is capable of containing the following agents: a polyhydroxy (polyol) curing agent; vulcanization accelerators selected from among quaternary ammonium salts, quaternary phosphonium salts, tertiary sulfonium salts; acid acceptors such as calcium hydroxide, magnesium oxide, and the like; fillers such as carbon black, clay, barium sulfate, calcium carbonate, magnesium silicate, and the like; processing aids such as octadecyl amine, wax, and the like; a thermal aging inhibitor; and pigments. For example, the copolymer contains 0.1 to 20 parts by weight and favorably 0.5 to 3 parts by weight of the curing agent, 0.1 to 20 parts by weight and favorably 0.5 to 3 parts by weight of the vulcanization accelerator, 1 to 30 parts by weight and favorably 1 to 7 parts by weight of the acid acceptor, and 5 to 100 of the filler, and 0.1 to 20 parts by weight of the processing aid, for 100 parts by weight of the copolymer, respectively.

In addition to the above-described agents, the copolymer is capable of containing a second curing agent such as an organic peroxide compound at 0.7 to 7 parts by weight and favorably 1 to 3 parts by weight. In addition, fillers and additives to be contained in known rubber compositions can be appropriately used for the copolymer within a range in which they do not damage the resistance of the copolymer to the urea compound and the sealing performance thereof.

Common rubber processing can be adopted in the method of mixing the above-described components or molding the rubber composition. After the components are kneaded by an open roll, a Banbury mixer, a kneader or an enclosed-type mixer, the rubber composition is press-molded (press-cured), extrusion-molded or injection-molded. To improve the property of the rubber composition, it is preferable to secondarily cure the rubber composition by sufficiently heating it in an oven, for example, at 200°C for 24 hours.

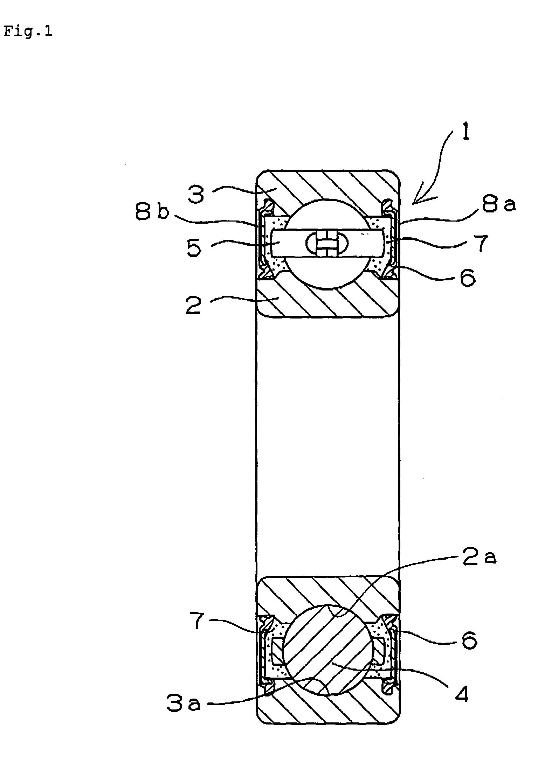

Fig. 1 shows an example of the rollingbearing of the present invention. Fig. 1 is a sectional view of a deep groove ball bearing in which grease is sealed.

A deep groove ball bearing 1 includes an inner ring 2 having an inner ring rolling surface 2a on its peripheral surface, an outer ring 3 concentric with the inner ring 2 and having an outer ring rolling surface 3a on its inner peripheral surface, and a plurality of rolling elements 4 disposed between the inner ring rolling surface 2a and the outer ring rolling surface 3a. A retainer 5 holding the rolling elements 4 and a sealing member 6 fixed to the outer ring 3 are provided at openings 8a and 8b of the inner ring 2 and the outer ring 3 respectively. The openings 8a and 8b are disposed at the axial end of the inner ring 2 and the outer ring 3 respectively. A grease 7 is essentially applied to the periphery of each rolling element 4.

The sealing member 6 may consist of a rubber molding or a composite of the rubber molding and a rigid plate such as a metal plate, a plastic plate, and a ceramic plate. It is preferable to use the composite of the rubber molding and the metal plate because the composite of the rubber molding and the metal plate is durable and the rubber molding and the metal plate adhere to each other easily.

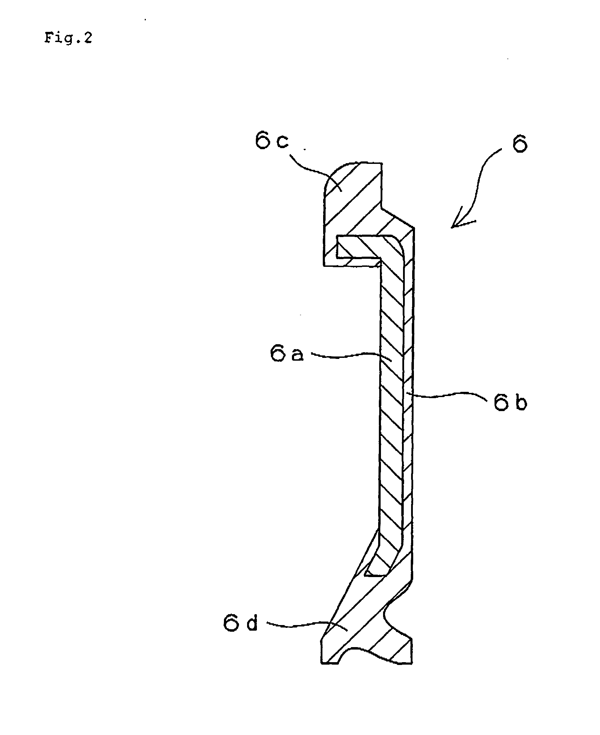

Fig. 2 shows an example of the sealing member 6 consisting of the composite of the rubber molding and the metal plate. The sealing member 6 is obtained by fixing a fluororubber molding 6b to a metal plate 6a such as a steel plate. Both a mechanical fixing method and a chemical fixing method can be used. It is preferable to adopt a fixing method of performing molding and cure at the same time when the fluororubber molding is cured, with the metal plate disposed in a curing mold.

The following three methods can be used to mount the sealing member 6 on the rolling bearing: (1) One end 6c of the sealing member 6 is fixed to the outer ring 3, whereas the other end 6d of the sealing member 6 is disposed along a V-groove of a sealing surface of the inner ring 2 to form a labyrinth gap. (2) One end 6c of the sealing member 6 is fixed to the outer ring 3, whereas the other end 6d of the sealing member 6 is brought into contact with a side surface of the V-groove of the sealing surface of the inner ring 2. (3) One end 6c of the sealing member 6 is fixed to the outer ring 3, whereas the other end 6d of the sealing member 6 is brought into contact with the side surface of the V-groove of the sealing surface of the inner ring 2. Further a slit for preventing suction is formed on a lip portion which contacts V-groove of the sealing surface of the inner ring 2 to form a low torque construction.

In any of the above-described mounting methods, the sealed grease 7 contacts the rubber molding 6b composing the sealing member 6. A portion of the rubber molding 6b that contacts the sealed grease 7 is made of a fluororubber molding. The rubber molding 6bmay consist of the above-described fluororubber molding. Alternatively the rubber molding 6b may be composed as a laminate of the above-described fluororubber molding disposed at the portion that contacts the grease 7 and the conventional rubber molding disposed on the rear surface of the fluororubber molding.

Grease containing the urea compound is enclosed in the above-described rolling bearing.

Base oil of the urea compound-containing grease can be mixed with mineral oil such as paraffin mineral oil and naphthenic mineral oil; synthetic hydrocarbon oil such as poly-α-olefin (PAO);ether oilsuch as dialkyldiphenyl ether oil,alkyltriphenyl ether oil, and alkyltetraphenyl ether oil; and ester oil such as diester oil, polyol ester oil, complex ester oil of these oil, aromatic ester oil, and carbonate oil. These oil can be used singly or in combination.

In consideration of lubricating performance and lubricating life of the rolling bearing at high temperatures and speeds, it is preferable to use the dialkyldiphenyl ether oil, the diester oil, and the poly-α-olefin (PAO).

The urea compound to be contained in the urea compound -containing grease as a thickening agent thereof contains a urea bond (-NHCONH-). As the urea compound, diurea, triurea, tetraurea, and urea urethane are listed. The diurea having two urea bonds in its molecule is preferable and is shown by a chemical formula 1 shown below. Reference symbol R₂ in the chemical formula 1 is a bivalent aromatic hydrocarbon radical having 6 to 15 carbon atoms and shown by a chemical formula 2.

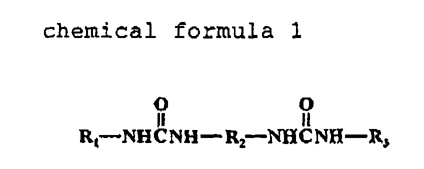

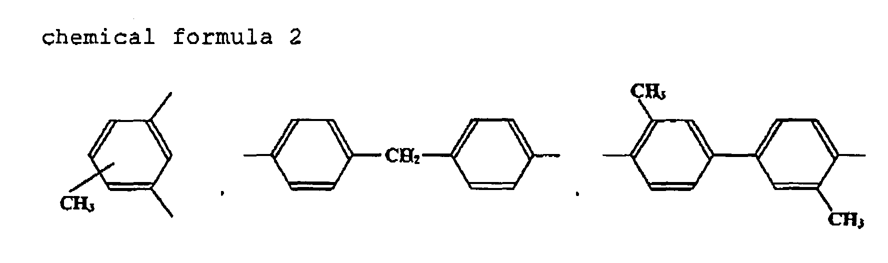

Reference symbols R₁ and R₃ in the chemical formula 1 denote an aliphatic group, an alicyclic group or an aromatic group. It is preferable to use the urea compound-containing grease in which aliphatic diurea in which R₁ and R₃ are aliphatic groups is used as a thickening agent, because the urea compound-containing grease, in which aliphatic diurea is used as a thickening agent, is easy to be mixed with the fluorine grease. The urea compound is obtained by reaction between a diisocyanate compound and an amine compound whose equivalent weight is equal to that of the diisocyanate compound.

It is preferable that the urea compound-containing grease contains 95 to 70 wt% of the base oil and 5 to 30 wt% of the urea compound for the total amount thereof. By setting the mixing ratio of the base oil and the urea compound to this range, the grease leaks little from the bearing and the consistency of the urea compound-containing grease can be adjusted appropriately to keep the lubricity thereof for a long time.

When the rolling bearing is subjected to a severe temperature condition, it is possible to use a mixture of the grease containing the urea compound as its thickening agent and the fluorine grease.

It is preferable that the fluorine grease contains polytetrafluoroethylene as its thickening agent and perfluoro polyether (PFPE) as its base oil.

It is preferable that the fluorine grease contains 50 to 90 wt% of perfluoro polyether oil and 50 to 10 wt% of fluorocarbon resin powder for the total amount of the fluorine grease. By setting the mixing ratio between the perfluoro polyether oil and the fluorocarbon resin powder to this range, the fluorine grease leaks little from the rolling bearing, and the consistency of the fluorine grease can be adjusted preferably to keep the torque low for a long time.

It is preferable that the mixing ratio (weight ratio) between the urea grease and the fluorine grease of the mixed grease is set to 30:70 to 75:25. When the urea grease is mixed with the fluorine grease, it is preferable that the urea grease contains the aliphatic diurea as its thickening agent and the ester oil as its base oil and that the fluorine grease contains PTFE as its thickening agent and PFPE as its base oil.

### Examples

The urea compound-containing grease and the mixed grease used in each of the examples of the present invention and each of the comparison examples are shown below.

### (1) Urea compound-containing grease

Produced by Klueber Inc.: "Asonic HQ72-102" (thickening agent: aliphatic diurea, base oil: aromatic polyester oil, kinematic viscosity at 40°C: 100 mm²/s)

### (2) Mixed grease

For the total amount of grease, 33 wt% of fluorocarbonpowder ("Vidax" produced by DuPont Inc.) was added to 67 wt% of perfluoro polyether oil ("Krytox 240AC" produced by DuPont Inc.). The mixture was stirred and supplied to a roll mill. Thereby semisolid fluorine grease containing PTFE powder as its thickening agent and PFPE as its base oil was obtained.

One mole of diisocyanate was dissolved in a half amount of 88 wt% of aromatic ester oil (base oil: "Adeka Prover T90" produced by Asahi Denka Co., Ltd.) for the total amount of grease. Two moles of monoamine was dissolved in the remaining half amount of the aromatic ester oil. Thereafter the solution of the aromatic ester oil in which the monoamine was dissolved was added to the solution of the aromatic ester oil in which the diisocyanate was dissolved, while stirring was being made. The stirring was continued at 100 to 120°C for 30 minutes, and the isocyanate and the monomer reacted. As a result, 12 wt% of the urea compound (R₁ and R₃ in chemical formula 1 denote aliphatic group, R₂ denote aliphatic diurea which is diphenylmethane group) for the total amount of grease was deposited in the base oil. Thereafter the urea compound was supplied to a roll mill. Thereby semisolid urea compound-containing grease containing the urea compound as its thickening agent and synthetic oil as its base oil was obtained.

Mixed grease of the fluorine grease and the urea compound-containing grease was obtained by stirring a mixture of 40 wt% of the fluorine grease, 59 wt% of the urea compound-containing grease, and 1 wt% of an amine-containing corrosion inhibitor containing mineral oil as its base.

Rubber compositions used in the examples and the comparison examples are shown below.

An unvulcanized rubber composition was obtained by kneading the components shown in table 1 by using an open roll at 50°C. The mixing ratio of each component is as shown in table 1. The detail of the components show in table 1 are explained below.
(1) Fluororubber 1: VTR8802 (curing agent was added) produced by DuPont·Dow·Elastomers Inc.
(2) Fluororubber 2: "Aflas 150" produced by Asahi Glass Co., Ltd.
(3) Fluororubber 3: "A32J" produced by DuPont·Dow·Elasotmers Inc.
(4) Acrylic rubber: "AR71" produced by Zeon Corporation.
(5) Magnesium oxide: "Kyowa Mag 150" produced by Kyowa Chemical Industry Co., Ltd.
(6) Calsium hydroxide: "Calvit" produced by Ohmi Chemical Industry Co., Ltd.
(7) Carbon 1: "N990" produced by Engineered Carbons Inc.
(8) Co-crosslinking agent: "TAIC" produced by Nippon Kasei Chemical Co., Ltd.
(9) Curing agent: "Perkadox 14" produced by Kayaku Akzo Corporation.
(10) Carbon 2: "Seast 3" produced by Tokai Carbon Co., Ltd.
(11) Sulfur: "Sulfax PMC" produced by Tsurumi Chemical Industry Co., Ltd.
(12) Antioxidant: "NOCRAC CD" produced by Ouchishinko Chemical Industrial Co., Ltd.
(13) Sodium stearate: "NS soap" produced by Kao Corporation.
(14) Potassium stearate: "Nonsoul SK-1" produced by NOF Corporation.

**Table 1**

| | M. Ex.¹⁾ 1 | M. Ex. 2 | M. Ex. 3 | M. Ex. 4 |
|---|---|---|---|---|
| Mixing ( part by weight ) | | | | |
| Fluoro rubber(1) | 100.0 | - | - | - |
| Fluoro rubber(2) | - | 100.0 | - | - |
| Fluoro rubber(3) | - | - | 100.0 | - |
| Acrylic rubber | - | - | - | 100.0 |
| Magnesium oxide | 8.0 | - | 3.0 | - |
| Calsium hydroxide | - | - | 6.0 | - |
| Carbon (1) | 30.0 | 35.0 | 20.0 | - |
| Co-crosslinking agent | - | 5.0 | - | - |
| Curing agent | - | 1.0 | - | - |
| Carbon (2) | - | - | - | 50.0 |
| Stearic acid | - | - | - | 1.0 |
| Antioxidant | - | - | - | 2.0 |
| Sulfur | - | - | - | 0.3 |
| Sodium stearate | - | - | - | 3.0 |
| Potassium stearate | - | - | - | 0.5 |

| | | | | |
|---|---|---|---|---|
| 1) M. Ex. : Mixing Example | | | | |

### Examples 1 through 4 and Comparison Examples 1 through 8

The above-described unvulcanized rubber composition was cured by using a curing press machine. Thereby a cured molding of each of the examples and the comparison examples was obtained. The temperature of the die was set to 170°C. The primary cure was performed at 170°C for 12 minutes. Thereafter secondary cure was carried out in a constant temperature bath at 200°C for 24 hours for the mixing examples 1 through 3 and 170°C for 4 hours for the mixing example 4.

The obtained cured moldings were punched into a predetermined configuration to obtain a specimen of No. 3 of JIS K 6251. The specimens were immersed in the above-described urea compound-containing grease and the above-described mixed grease at 170°C or 200°C for 1000 hours to measure property values thereof before and after the immersion. More specifically, the hardness, tensile strength, tensile elongation, and volume of each specimen were measured to evaluate a change in the hardness, the rate of change in the tensile strength, the rate of change in the tensile elongation, and the rate of change in the volume. The measuring conditions were set in accordance with JIS K 6251K, JIS K 6253K, JISK6258. The results are shown in tables 2 through 4. Reference symbol * in tables 3 and 4 indicates "unmeasurable".

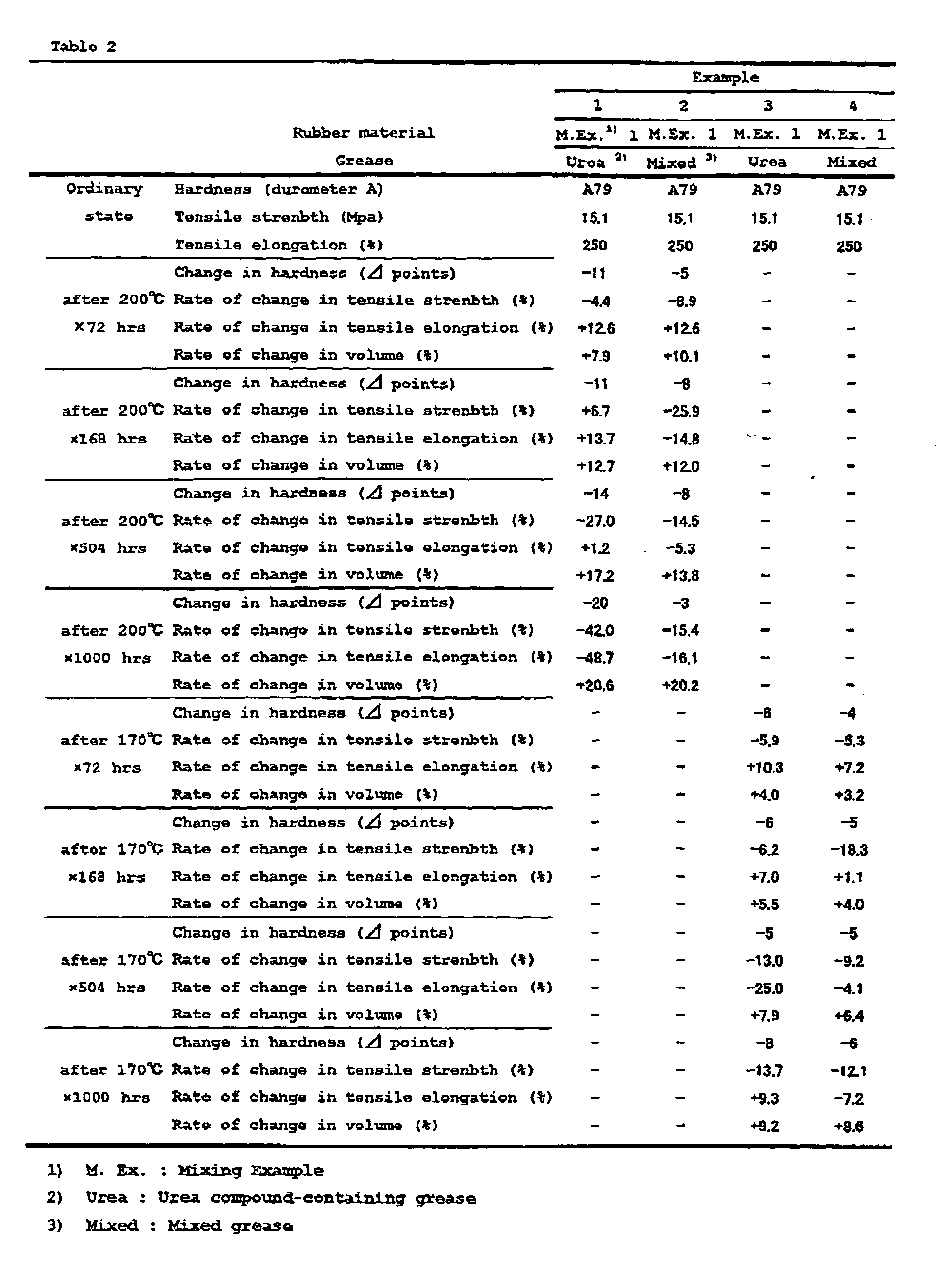

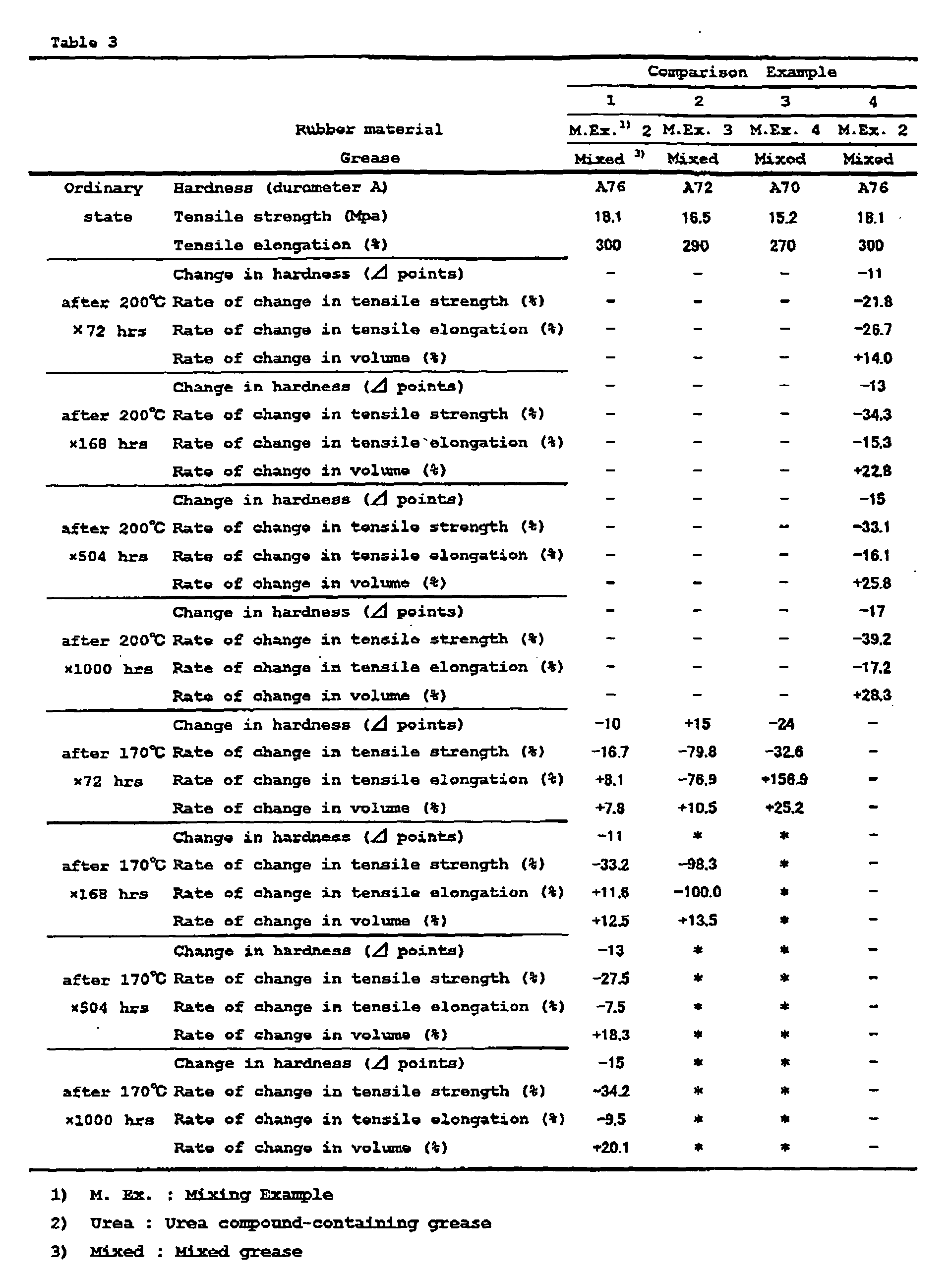

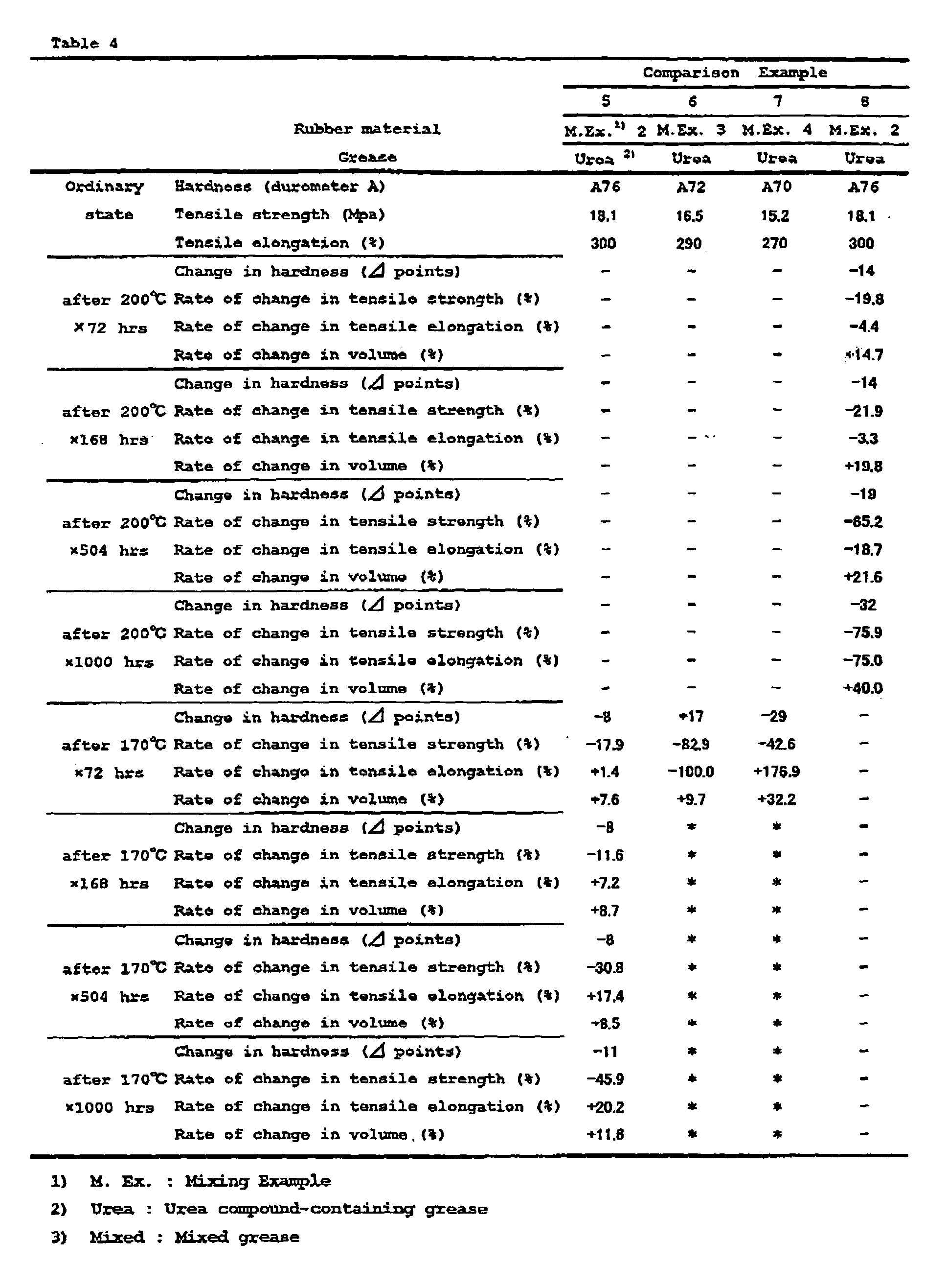

The specimens of the examples 1 through 4 deteriorated to a low extent when they were immersed in the urea compound-containing grease and the mixed grease at high temperatures for a long time. This indicates that the specimens of the examples 1 through 4 were resistant to the urea compound-containing grease and the mixed grease.

The specimens of the comparison examples 2, 3, 6, and 7 deteriorated to a high extent when they were immersed in the grease containing the urea compound. The specimens of the comparison examples 1, 4, 5, and 8 deteriorated to a low extent when they were immersed in the grease at a low temperature of 170°C and at a high temperature for a short period of time (about 72 hours), but deteriorated to a high extent when they were immersed in the grease at a temperature of 200°C for a long period of time.

### Example 5

An unvulcanized rubber composition of the mixing example 1 was molded onto the core of an iron plate to obtain a non-contact-type rubber seal (see Fig. 2) for abearing 6204 (inner diameter: 20mm, outer diameter: 47mm, width: 14mm). The rubber seal was incorporated in a specimen bearing washed cleanly with petroleum benzine. A mixture of the fluorine grease and the urea compound-containing grease was enclosed inside the bearing. The mixture occupied 38 volume % of the entire space inside the bearing. The rolling bearing was evaluated in a high-temperature durability test. Table 5 shows results.

In the high-temperature durability test, the rolling bearing was rotated at a radial load of 67N, a thrust load of 67N, 10000 rpm, and an atmospheric temperature of 220°C. The period of time required for the motor to stop owing to an overload was measured. The test time was 1000 hours at maximum.

### Comparison examples 9 and 10

The specimen bearing of each of the comparison example 9 having the mixing example 2 and the comparison example 10 having the mixing example 3 were prepared in the same manner as that of the example 5. A high-temperature durability test similar to that conducted in the example 5 was conducted. Table 5 shows results.

**Table 5**

| | Example | Comparison Example | |
|---|---|---|---|
| | 5 | 9 | 10 |
| Rubber material | M.Ex. ¹⁾ 1 | M.Ex. 2 | M.Ex. 3 |
| Life (hr) | 1000 or more | 570 | 340 |

| | | | |
|---|---|---|---|
| 1) M. Ex. : Mixing Example | | | |

The rubber seal of the example 5 allowed the motor to operate for 1000 hours. No crack was found visually after the test finished.

The specimen of each of the comparison examples 9 and 10 had seizing in a shorter period of time. It is supposed that the leak of the grease which occurred during the operation caused the specimen of the comparison examples 9 and 10 to have a short life. In the specimen of the comparison example 10, a large number of cracks were found at the portion of contact in the seal after the test finished.

The sealing member of the present invention for use in the rolling bearing is resistant to the urea compound-containing grease. Therefore the sealing member is applicable to a rolling bearing that is used at a high temperature.

## Claims

1. A sealing member for use in a rolling bearing, for sealing grease to be enclosed in said rolling bearing, comprising a rubber molding which contacts said grease,
wherein said rubber molding is formed by molding a curable fluororubber composition consisting of a copolymer containing tetrafluoroethylene, propylene, and a crosslinkable monomer consisting of unsaturated fluoro-hydrocarbon, having two to four carbon atoms, in which a part of hydrogen atoms is substituted with fluorine atoms.

2. A sealing member according to claim 1, wherein said crosslinkable monomer is at least one monomer selected from the group consisting of trifluoroethylene; 3, 3, 3-trifluoropropene-1; 1, 2, 3, 3, 3-pentafluoropropene; 1, 1, 3, 3, 3-pentafluoropropylene; and 2, 3, 3, 3-tetrafluoropropene.

3. A sealing member according to claim 1, wherein said copolymer contains 45 to 80 wt% of said tetrafluoroethylene, 10 to 40 wt% of said propylene, and 0.1 to 15 wt% of said crosslinkable monomer for a total amount of said copolymer, respectively.

4. A sealing member according to claim 1, wherein said copolymer contains vinylidene fluoride.

5. A sealing member according to claim 4, wherein said vinylidene fluoride is contained at 2 to 20 wt% for a total amount of said copolymer.

6. A sealing member according to claim 3, wherein said fluororubber composition contains 0.1 to 20 parts by weight of a curing agent, 0.1 to 20 parts by weight of a vulcanization accelerator, 1 to 30 of an acid acceptor, and 5 to 100 parts by weight of a filler, and 0.1 to 20 parts by weight of a processing aid for 100 parts by weight of said copolymer, respectively.

7. A sealing member according to claim 5, wherein said fluororubber composition contains 0.1 to 20 parts by weight of a curing agent, 0.1 to 20 parts by weight of a vulcanization accelerator, 1 to 30 of an acid acceptor, and 5 to 100 parts by weight of a filler, and 0.1 to 20 parts by weight of a processing aid for 100 parts by weight of said copolymer, respectively.

8. A sealing member according to claim 1, wherein said sealing member consists of said rubber molding.

9. A sealing member according to claim 1, wherein said sealing member is a composite of said rubber molding and a rigid plate.

10. A sealing member according to claim 9, wherein said rigid plate is a metal plate.

11. A sealing member according to claim 1, wherein grease to be enclosed in said rolling bearing is urea grease.

12. A sealing member according to claim 11, wherein a base oil of said urea grease is at least one base oil selected from the group consisting of alkyldiphenyl ether oil, ester oil, poly-α-olefin oil; and a thickening agent of said urea grease is diurea.

13. A sealing member according to claim 11, wherein said grease to be enclosed in said rolling bearing is mixed grease of said urea grease and fluorine grease.

14. A sealing member according to claim 13, wherein a base oil of said fluorine grease is perfluoro polyether oil; and a thickening agent of said fluorine grease is polytetrafluoroethylene.

15. A sealing member according to claim 13, wherein a mixing ratio (weight ratio) between said urea grease and said fluorine grease of said mixed grease is set to 30:70 to 75:25.

16. A rolling bearing comprising an inner ring; an outer ring; a plurality of rolling elements disposed between said inner ring and said outer ring; and a sealing member, provided at an opening portion of said inner ring and said outer ring disposed at an axial end thereof, for sealing grease disposed on a periphery of said rolling elements,
wherein said grease contains a urea compound; and said sealing member is a sealing member according to claim 1.
